# EUROPEAN PATENT APPLICATION

(11) **EP 4 811 798 A1**
(43) Date of publication of application: **23.09.2026**
(21) Application number: 25382257.1
(22) Date of filing: 19.03.2025
(51) Int. Cl.: H04N 21/2389, G10L 19/018, H04H 60/44, H04L 7/04, H04N 9/82, H04N 21/422, H04N 21/43, H04N 21/439, H04N 21/462, H04N 21/81, H04N 21/8358, H04N 21/8547

(54) **METHOD AND APPARATUS FOR SYNCHRONIZING A PLURALITY OF RECEIVED DATA SIGNALS USING PSEUDO-RANDOM SEQUENCES**

(71) Applicant: Broadcast Analysis Technologies, S.L., 28943 Fuenlabrada, (Madrid) (ES)
(72) Inventor: Solsona Sagrado, Gabriel, 28941 Fuenlabrada (ES)
(74) Representative: ZBM Patents - Zea, Barlocci & Markvardsen

(57) **Abstract**

A method of synchronizing a plurality of received data signals is presented, the method comprising receiving an encoded timestamp signal, and decoding the received encoded timestamp signal using orthogonal pseudo-random sequences. A binary timestamp is obtained from the decoded timestamp signal, which is used to calculate a delay of the received encoded timestamp signal, the delay being further used for synchronizing the plurality of received data signals.

## Description

The present method and apparatus for synchronizing a plurality of received data signals relates to the field of systems for transmitting data signals in broadcasting environments.

### BACKGROUND

Broadcast systems such as TV Broadcast systems, using one or more transmission paths for different data signals (such as, for example, audio or video signals), use multiple transmission infrastructures, compression technologies and different transport routes. Differences between transmission paths produce different delays in different signals upon arrival to Right Holders. Furthermore, the difference between paths make it difficult to calculate exact time difference between transmitted signals to compensate for delays, such as, for example, delays between audio signals, or lip-sync type delays.

The delays occurring in the transmission of Multilateral, Unilateral and Commentary audio signals in a Broadcast system can be, for example, possible advances or delays of the commentator's narration of an event in an audio signal with respect to the video signal depicting such an event, causing "spoiler" events (for example, the announcement of a goal before it happens on screen), or perceptible lag between an audio signal and a video signal, which degrades the audiovisual experience for the viewer.

Conventional methods, based on reference signals embedded in the transmitted audio or video signals, or injection of test patterns within said audio or video signals, do not solve the problem in a precise manner. Therefore, there is a need for a system to synchronize transmitted signals in an accurate manner.

### SUMMARY

In a first aspect, a method of synchronizing a plurality of received data signals is presented. More specifically, the method comprises the steps of:
- receiving an encoded timestamp signal at a reception time;
- decoding the received encoded timestamp signal, using a predefined set of orthogonal pseudo-random sequences;
- obtaining a binary timestamp from the decoded timestamp signal, wherein the binary timestamp represents a generation time of the encoded timestamp signal; wherein the generation time and the reception time are referenced to a common global time standard;
- calculating a delay of the received encoded timestamp signal, wherein the delay is a time difference between the reception time and the generation time; and
- synchronizing the plurality of received data signals based on the calculated delay.

Performing the above-described method allows synchronizing received data signals simultaneously and in a precise manner, the received data signals being generated at different physical points of a data communication system.

According to the present disclosure, when an encoded timestamp signal is received by a signal receiver at a reception time, the received signal is decoded using one or more orthogonal pseudo-random sequences of a predefined set of orthogonal pseudo-random sequences. Decoding a signal using orthogonal pseudo-random sequences involves correlating the received data signal with a known sequence (i.e., one or more orthogonal pseudo-random sequences) to extract the desired information from the signal. Decoding a signal using orthogonal pseudo-random sequences is used in spread spectrum communications, such as, for example, CDMA (Code Division Multiple Access) or DSSS (Direct Sequence Spread Spectrum) type communications.

Different techniques can be used to decode the received encoded timestamp signal using an orthogonal pseudo-random sequence, such as, for example, Matched Filtering, Maximum Likelihood (MLD), Least Squares, or Walsh-Hadamard Transform.

Once the encoded timestamp signal is decoded, a binary timestamp is obtained from within the decoded information of the decoded timestamp signal. The obtained binary timestamp represents a generation time of the encoded timestamp signal, and the generation time and the reception time are referenced to a common global time standard. The common global time standard may be, for example, UTC, GMT or TAI standard. The reception time may be referenced by means of, for example, a connection to a satellite, the satellite signal delivering a global time standard reference time from which the reception time can be referenced. The satellite signal can be, for example, a GPS signal.

Furthermore, a delay of the received encoded timestamp signal is calculated. By delay it may be understood the time difference between the reception time and the generation time of the encoded timestamp signal. The generation time is represented by the obtained binary timestamp, and the reception time is the time when the encoded timestamp signal reached the receiver apparatus receiving the encoded timestamp signal. The accuracy of the calculated delay is increased because both times are referenced to the same global standard time.

Then, the synchronization of a plurality of received data signals is performed, the synchronization being based on the calculated delay. The calculated delay is a representation of the delay of the path the encoded timestamp signal has been transmitted through, from a transmitting origin of the signal to the receiver which received the signal. Thus, a plurality of received data signals can be synchronized using the calculated delay as a reference for the synchronization. Furthermore, the received encoded timestamp can be sent independently from the plurality of received data signals, or embedded in one or more of the received data signals. Also, by using a common global time standard as a reference for the binary timestamp (i.e. generation time) encoded within the encoded timestamp signal and for the reception time, the accuracy of the synchronization is increased.

Therefore, the above-disclosed method enables an absolute temporal identification of a signal sent through a transmission path from the origin of the transmission, using timestamps synchronized with a high-precision global standard (e.g., a global standard obtained from GPS signal clocks). This replaces the dependence on timestamps relative to one or more signals (for example, delays reference between two or more transmitted signals), with an absolute reference. This allows synchronizing data signals in either an End-to-end way or by synchronizing sub-paths of a full transmission path. The use of orthogonal pseudo-random sequences to encode and decode binary timestamps increases the strength of the transmitted encoded signal against interferences. Even if the interferences render the channel not suitable for sending data signals such as audio or video data not encoded with orthogonal pseudo-random sequences, an encoded binary timestamp may be sent and received by a receiver, and further correctly decoded. Furthermore, if an high interference affect the transmission of an encoded binary timestamp, such that a receiver is unable to decode it upon reception, the encoded binary timestamp can be quickly resent, dramatically decreasing the time between the reception of two consecutive encoded binary timestamps. Furthermore, it is possible to use a binary timestamp for each of one or more transmitted data signals (for example, in Broadcast communications, a Multilateral signal or a Unilateral signal) using different types of encoding more suitable for the type of data signal in particular. For example, a binary timestamp may be encoded by using an image or audio encoding, which may be captured within a data signal (for example, a QR code captured by a video signal), or it may be encoded in a bitstream, which can be transmitted independently to other data signals.

By using orthogonal pseudo-random sequences to encode and decode timestamp signals, to be further used to synchronize data signals, several timestamp signals can be sent and received continuously over time, or even overlapped in time, over a single communication channel. Therefore, a more precise synchronization of data signals can be achieved, without generating an interference of the encoded timestamp signals with the data signals being sent simultaneously. The receiving frequency of binary timestamps used to calculate transmission delays of a timestamp signal, and further synchronize one or more data signals, can thus be increased without interfering with the data signals themselves.

In some examples, the steps of:
- receiving an encoded timestamp signal at a reception time;
- decoding the received encoded timestamp signal, using a predefined set of orthogonal pseudo-random sequences;
- obtaining a binary timestamp from the decoded timestamp signal, wherein the binary timestamp represents a generation time of the encoded timestamp signal; wherein the generation time and the reception time are referenced to a common global time standard; and
- calculating a delay of the received encoded timestamp signal, wherein the delay is a time difference between the reception time and the generation time;
are performed for each data signal of the plurality of received data signals, obtaining thereby a plurality of different corresponding delays; and the step of synchronizing the plurality of received data signals is based on the greatest calculated delay of the plurality of different corresponding delays.

This way, a specific delay for each one of the data signals of the plurality of data signals can be calculated, each calculated delay corresponding to the transmission path of the corresponding data signal. Furthermore, each received data signal can be aligned according to its corresponding calculated delay, thus increasing the accuracy of the synchronization.

In some examples, synchronizing the plurality of data signals based on the greatest calculated delay comprises aligning at least two data signals of the plurality of data signals.

For example, the synchronizing may be a Time-Delay Alignment.

A set of signals with arrival times {*dₙ*} is considered, and the maximum time is identified as d*ₘ*. Then, for each signal n, the compensation delay is defined as: $Δ {t}_{n} = {d}_{m} - {d}_{n}$

By inserting in each signal the corresponding calculated compensation delay, all signals are aligned at the reference instant *dₘ*. This method is useful in coincident audio mixing, multichannel processing and correlation applications, as it enables the coherent superposition of signals with different arrival times.

In some examples the data signals are one of audio signals or video signals. Therefore, the method allows correcting audio-audio, video-video or audio-video misalignment problems (the last ones commonly known as lip-sync), wherein desynchronizations can reach the order of tens of milliseconds. The above-described method allows further detecting and correcting misalignments between audio signals, wherein delay sensitivity is much higher and precision on the order of microseconds is required. Examples of such cases are the temporal misalignment between a reporter's microphone and the camera's microphone. When such two audio signals are added, time lags on the order of tens of milliseconds occur due to the similarity of the two audio signals, which severely decrease the quality of the resulting audio signal. Furthermore, delays between two or more audio signals may cause, for example, comb filters or echoes that deteriorate audio quality, dissemination of the stereo or multichannel image (such as 5.1 or 5.1.4) which affects the perception of the virtual soundscape, or loss of clarity in the recreation of surround or immersive type audio.

Furthermore, the method increases the flexibility to inject signals into different parts of a broadcasting system. For example, in the broadcasting system of an event originating at a venue (such as, for example, a football stadium), wherein multiple commentators from different media generate commentary audio signals corresponding to the same event at the same time, or cameras with different shots of the captured event simultaneously reach an endpoint each with a different delay due to the transmission technologies employed, the synchronization of any of said signals can be performed in any point of the broadcasting system without depending on the type of transmission path or the encapsulating technology (for example, IP packets, Digital TV, radio links, etc). All of the above-mentioned signals can be thus aligned in an accurate way regardless of where or when the present method is performed.

In some examples, the encoded timestamp signal is received from an audio communications channel, wherein the audio communications channel occupies a frequency band between 20 Hz and 20 KHz. This way, existing channels can be used for the transmission of an encoded timestamp signal. Therefore, no additional communications channel has to be set-up, and the same existing equipment (i.e., transmitters, receivers) can be used to transmit the encoded timestamp signals. Furthermore, in other examples, each of the data signals of the plurality of data signals is received from the same audio communications channel.

In some examples, decoding the received encoded timestamp signal comprises:
- calculating a cross-correlation between the received encoded timestamp signal and each of the sequences of the predefined set of orthogonal pseudo-random sequences, obtaining thereby a plurality of corresponding cross correlation parameters;
and wherein the obtaining of the binary timestamp is performed using the orthogonal pseudo-random sequence used to calculate the highest cross- correlation parameter.

Cross-correlation is a mathematical operation that measures the similarity between two signals by shifting one relative to the other. It helps determine how much one signal resembles another at different time shifts. The resulting cross-correlation parameter represents the similarity between the two correlated signals. In this case, when calculating the above-described cross-correlation, the resulting cross-correlation parameter measures the similarity between the received encoded timestamp signal and each of the orthogonal pseudo-random sequences of a predefined set of orthogonal pseudo-random sequences.

In embodiments, employing cross-correlation for decoding the received encoded timestamp signal provides a highly robust mechanism for determining the time difference between the incoming signal and the most closely matching sequence from a predefined set of orthogonal pseudo-random sequences. Specifically, by calculating a cross-correlation between the received encoded timestamp signal and each of the sequences, the system identifies the sequence that yields the highest cross-correlation value and thereby obtains the binary timestamp encoded within the received signal. Thus, the calculation of the correlation effectively maps the maximum correlation peak to the time offset of interest in an accurate and reliable way.

Furthermore, the above-described cross-correlation has an inherent resilience to external interference and noise. By measuring the similarity of the received signal against each orthogonal pseudo-random sequence, non-correlated signals and random disturbances are filtered out, thus preserving measurement stability. This robustness enables a system to operate with lower signal-to-noise ratio (SNR) requirements, as the orthogonality and correlation properties together assist in distinguishing the valid encoded timestamp from noise components.

Consequently, hardware implementations can be designed with simpler or smaller-scale front-end processing elements, as the computational complexity is primarily contained within a correlator or a digital signal processor configured to handle cross-correlation operations, rather than more extensive decoding steps.

Moreover, since the cross-correlation technique inherently relies on a straightforward mathematical operation - correlation of a received waveform with reference sequences (i.e., in this example, the sequences of the predefined set of orthogonal pseudo-random sequences) - a cross-correlation can be supported by existing signal processing architectures within Broadcast systems such as, for example, TV broadcast systems. Therefore, implementing a cross-correlation can decrease the cost of the hardware and facilitate more compact hardware layouts, and ensure that high precision in time measurement is achievable for diverse applications that demand reliable synchronization. The resulting correlation peaks effectively pinpoint the time offset without resorting to additional, more complex decoding schemes, thereby affording a practical and efficient solution for binary timestamp recovery.

In some examples, the orthogonal pseudo-random sequences are Maximum-Length Sequences (MLS). A Maximum-Length Sequence (MLS) is a type of pseudo-random binary sequence that has the longest possible period before repeating. It is widely used in applications such as spread spectrum communication, system identification, cryptography, and testing of digital circuits.

Using orthogonal Maximum-Length Sequences (MLS) for signal transmission enhances auto-correlation properties of the sequences, enabling precise time delay estimation and minimizing inter-symbol interference. A low cross-correlation exists between different MLS orthogonal sequences. Also, once a transmission using MLS has a frequency band allocated to work, said MLS sequence uses the full frequency spectrum allocated for it. All of this allows increasing the number of different encoded binary timestamps (using MLS orthogonal sequences) being sent at the same time, while maintaining resistance to noise and interference between transmitted encoded binary timestamps. Additionally, MLS sequences are computationally efficient to generate, exhibit a white noise spectrum for spectral flatness, and enhance signal decoding in low-SNR environments.

Furthermore, systems using MLS sequences, unlike similar systems that use pure tone signals with a single peak in the frequency spectrum, employs a signal with a flat frequency spectrum. This means that its energy is evenly distributed over all frequencies, i.e. all frequencies have the same power within a given range.

This enables detecting possible distortions in the frequency response of the transmission channel by sending a signal with a flat spectrum (i.e., an MLS sequence) and analyzing how it is altered when it reaches the receiver.

According to another aspect of the present disclosure, a method of transmitting an encoded timestamp signal for synchronizing a plurality of data signals is presented. More precisely, the method comprises the steps of:
- selecting an orthogonal pseudo-random sequence from a predefined set of orthogonal pseudo-random sequences;
- obtaining a binary timestamp representing a generation time of an encoded timestamp signal; wherein the generation time is referenced to a global time standard;
- encoding the binary timestamp into an encoded timestamp signal, using the selected orthogonal pseudo-random sequence; and
- transmitting the encoded timestamp signal.

In some examples, the orthogonal pseudo-random sequences used to encode the binary timestamp are Maximum-Length Sequences (MLS).

Furthermore, in some examples, the encoded timestamp signal is transmitted on an audio communications channel, wherein the audio communications channel occupies a frequency band between 20 Hz and 20 KHz.

According to another aspect of the present disclosure, a data processing apparatus for synchronizing a plurality of received data signals is presented, the data processing apparatus comprising a processor configured to perform the steps of any of the examples of the method of synchronizing a plurality of received data signals.

According to another aspect of the present disclosure, a data processing apparatus for transmitting an encoded timestamp signal for synchronizing a plurality of data signals is presented, the data processing apparatus comprising a processor configured to perform the steps of any of the examples of the method of transmitting an encoded timestamp signal for synchronizing a plurality of data signals.

Also, according to another aspect, a Television system is presented, the system comprising:
- a data processing apparatus for transmitting an encoded timestamp signal for synchronizing a plurality of data signals as previously disclosed;
- a data processing apparatus for synchronizing a plurality of received data signals as previously disclosed; and
- a plurality of data capturing devices, each data capturing device being configured to generate a corresponding data signal of the plurality of data signals;

In some examples, the data signals generated by the capturing devices of the Television system are one of audio signals or video signals.

In another aspect, a computer program product is disclosed. The computer program product may comprise program instructions for causing a computing system to perform a method of synchronizing a plurality of received data signals according to some examples disclosed herein. Furthermore, another computer program product is disclosed, comprising program instructions for causing a computing system to perform a method of transmitting an encoded timestamp signal for synchronizing a plurality of data signals.

Any of the above-described computer program products may be embodied on a storage medium (for example, a CD-ROM, a DVD, a USB drive, on a computer memory or on a read-only memory) or carried on a carrier signal (for example, on an electrical or optical carrier signal).

Any of the above-described computer programs may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Non-limiting examples of the present disclosure will be described in the following, with reference to the appended drawings, in which:
Figure 1 depicts a first example of a system for synchronizing a plurality of data signals according to the present disclosure.
Figures 2 to 5 depict a second example of a system for synchronizing a plurality of data signals according to the present disclosure.
Figure 6 is a diagram block depicting an example of the method of synchronizing a plurality of data signals according to the present disclosure.

### DETAILED DESCRIPTION OF EXAMPLES

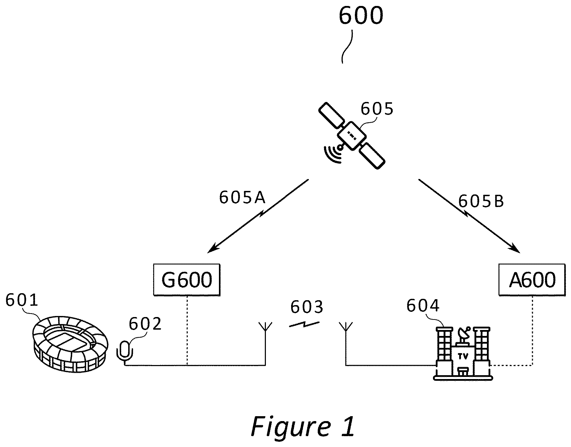

Figure 1 depicts a first example of a system for synchronizing a plurality of data signals according to the present disclosure. In the present example, the plurality of data signals are audio signals.

More precisely, figure 1 depicts a set-up of a TV broadcasting system 600 in a large-scale sport event, wherein a microphone 602 is deployed in a venue 601 (in this example, the venue 601 is a football stadium), in order to capture audio and generate audio signals from the venue 601. Furthermore, the microphone 602 is connected by radio transmission link 603 to an International Broadcast Center (IBC) 604. This way, the audio signals generated by the microphone 602 are sent to the IBC 604. The system 600 further comprises a Generator G600, which is an electronic device connected to the radio transmission link 603, and which is configured to send data through the radio transmission link 603. The system 600 also comprises an Analyzer A600 connected to the IBC 604, which is configured to analyse the signal sent from the microphone 602.

Furthermore, in this example, Generator G600 is connected to a GPS satellite 605 and configured to obtain a GPS signal using a a GPS link 605A. In this example, IBC 604 is also connected to the GPS satellite 605 and configured to obtain a GPS signal using a GPS link 605B.

The system 600 for synchronizing a plurality of data signals of the present example is configured to perform the method of transmitting an encoded timestamp signal for synchronizing a plurality of data signals and the method of synchronizing a plurality of data signals, both methods according to the present disclosure. In this example, the data signals are audio signals generated by the microphone 602.

More precisely, when performing the method of transmitting an encoded timestamp signal, Generator G600 selects an orthogonal pseudo-random sequence from a predefined set of orthogonal pseudo-random sequences pre-stored within the Generator G600. The orthogonal pseudo-random sequences are embodied in the form of a stream of bits.

Then, Generator G600 obtains a binary timestamp representing a generation time of an encoded timestamp signal, wherein the generation time is referenced to a global time standard (in this example, UTC standard, referenced from a GPS signal obtained from the GPS link 605A).

Then, Generator G600 encodes the binary timestamp into an encoded timestamp signal, using the selected orthogonal pseudo-random sequence.

Then, Generator G600 transforms the encoded timestamp signal into an electrical signal and transmits electrical signal, using, in this example, the radio link 603.

Furthermore, IBC 604 receives the sent encoded timestamp signal at a reception time. The reception time is determined by referencing it to a global time standard (in this example, UTC standard, referenced from a GPS signal obtained from the GPS link 605B).

The Analyzer A600 further decodes the received encoded timestamp signal, using a predefined set of orthogonal pseudo-random sequences stored within the Analyzer A600 in the same manner as it is stored in the Generator G600.

The Analyzer A600 further obtains a binary timestamp from the decoded timestamp signal, wherein the binary timestamp represents a generation time of the encoded timestamp signal; wherein the generation time and the reception time are referenced to a common global time standard (in this example, UTC time referenced from a GPS signal obtained from GPS satellite 605).

The Analyzer A600 further calculates a delay of the received encoded timestamp signal, wherein the delay is a time difference between the reception time and the generation time.

Then, the Analyzer A600 synchronizes a plurality of received audio signals, the audio signals being received from microphone 602. Other audio signals may be received at the IBC 604 from other microphones deployed in a different location in the venue 601. All of these received audio signals, in this example, are synchronized at the Analyzer A600, based on the calculated delay.

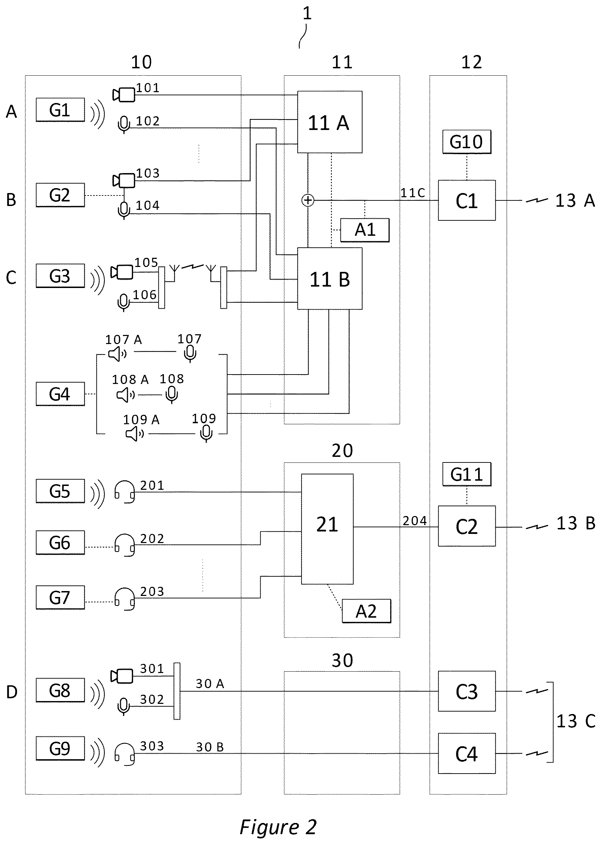

Figures 2 to 5 depict a second example of a system for synchronizing a plurality of data signals according to the present disclosure.

More precisely, figure 2 shows the first part of an example of a set-up of a TV broadcasting system 1 in a large-scale sport event, such as a football game in a stadium, wherein the data signals in the form of audio and/or video signals are generated in a plurality of venues (such as venue 10, which in the present example is the football stadium). The audio and video signals are captured by cameras and microphones deployed on-site at the venue to capture footage and sound. In the present example, a video camera 101 and microphone 102 capture a corresponding video and audio signal of an event A happening at the venue 10. Video camera 103 and microphone 104 capture event B happening at the venue 10, event B happening simultaneously to event A. Video camera 105 and microphone 106 capture a corresponding video and audio signal of an event C happening at the venue 10, event C happening simultaneously to event A and event B. Furthermore, microphones 107, 108 and 109 are deployed in order to capture respectively the sound coming from PA speakers 107A, 108A and 109A, the PA speakers being located in different places at the venue 10.

The events may be, for example, different scenes happening in the stadium field (for example, the players with the ball, a referee, a coach, etc...).

Each of the audio and video signals are transmitted through a corresponding transmission path to an Outside Broadcast 11, each transmission using different transmission technology: video signal captured by camera 101 and audio signal captured by microphone 102 are transmitted by cable; video signal captured by camera 103 and audio signal captured by microphone 104 are transmitted by cable; video signal captured by camera 105 and audio signal captured by microphone 106 are transmitted using a radio link; and each corresponding audio signals captured by microphones 107, 108, 109 are transmitted by cable.

The system 1 further comprises a plurality of Generators. In this example, Generators may be one of two types of electronic devices.

A first type of Generator may be an electronic device which outputs an orthogonal pseudo-random sequence in an acoustic and/or visual way (for example, a handheld device such as a smartphone, which is configured to output an acoustic signal representing an orthogonal pseudo-random sequence and/or a visual code such as a QR code or a barcode representing an orthogonal pseudo-random).

For example, an electronic device may output an orthogonal pseudo-random sequence in an acoustic way by inputting an electrical signal representing the zeros and ones of the orthogonal pseudo-random sequence into a speaker of the electronic device. The resulting noise output by the speaker, in this example, may be similar to that of a white noise output by the speaker, within the frequency range of, for example, the bandwidth of an audio channel (i.e., between 20Hz and 20KHz).

In the example of figure 2, Generators G1, G3, G5, G8 and G9 are this first type of Generators. In the case of G5, a speaker or sound-producing device may be located or attached to the commentator's microphone 201. In the case of PA speakers 107A, 108A and 109A, a Generator G4 is connected to each speaker, the Generator generating an orthogonal pseudo-random sequence in an acoustic form using the PA speakers 107A, 108A and 109A.

A second type of Generator may be an electronic device which is directly connected to the transmission path starting at a video camera (or microphone). This type of Generator may generate an orthogonal pseudo-random sequence, for example in binary, and may be configured to transmit it using the transmission path to which it is connected. In the example of figure 2, Generators G2, G6, G7, G10 and G11 are this second type of Generators.

An Outside Broadcast 11 is a mobile production unit equipped with control rooms, video/audio mixing equipment, and broadcasting tools. The Outside Broadcast 11 mixes the received audio and video signals and outputs a Multilateral Signal 11C comprising audio and video signal. The Multilateral Signal 11C is the main audio and video signal broadcast globally to different Right Holders (which may be, for example, a tv channel which has a license to broadcast the event). The Multilateral Signal 11C uses advanced compression schemes to optimize bandwidth (e.g., MPEG-H or HEVC for video, and Dolby E or AAC for audio), and it can undergo multiple format conversions and use different transport providers when being transmitted between the Outside Broadcast 11 and a Right Holder, all of which adds variable delays along the transmission path.

Furthermore, TV system 1 has a Technical Operations Center (TOC) 12, which acts as an identifying point for signal transmission from venue 10. In the present example, the Multilateral Signal 11C output by Outside Broadcast 11 is encoded by TOC 12, and sent using a radio link 13A to an International Broadcast Center (IBC, not shown in figure 2).

Furthermore, figure 2 also shows a plurality of commentators 201, 202, 203 which are within the venue 10. The commentators 201, 202, 203 give a running commentary each of the football game being played at the venue 10. Each commentary is captured by a microphone worn by each commentator 201, 202, 203, and each corresponding audio signal from each microphone is sent to a Commentary Routing Node (CRN) 20. The audio signals from each commentator are multiplexed by a multiplexing system 21 into a single Commentary Audio Signal 204 and sent to the TOC 12. Furthermore, the TOC 12 sends the single Commentary Audio Signal 204 to an International Broadcast Center (IBC, not shown in figure 2) using a radio link 13B.

Figure 2 also shows a further video camera 301, a microphone 302 and a commentator microphone 303 at venue 10. The video camera 301, a microphone 302 capture corresponding video and audio signals from the venue 10 of an event D happening at the venue 10 simultaneously to event A, B and C, and microphone 303 captures commentary performed by a commentator for the football game being held at the venue 10. These signals are Unilateral (Customized) Signals 30 and consist of a bundle of audio and video signals specifically designed to meet the particular needs of each individual Right Holder (for example, a specific video signal which a specific Right Holder uses exclusively). The audio and video signals generated for the Unilateral signals 30 comprise specific audio tracks (narrations, interviews, local language, etc.) that complement the main video and audio signal.

The Unilateral Signals 30 can be transmitted directly to a specific Right Holder via fibre, satellite or IP links, each with its own latency and processing characteristics. In this example, they are sent to the TOC 12 and further sent to a Right Holder using a fibre link 13C. Therefore, they do not use either the Outside Broadcast 11 or the CRN 20. The Unilateral Signals differ in their delay from the Multilateral Signal 11C in that the transmission path and compression tools can vary significantly. Unilateral Signals may not be transmitted using the same transmission paths as Multilateral Signals (e.g., they may be transmitted through a transmission path implemented by a specific Right Holder or group of Right Holders). Furthermore, Unilateral Signals are not transmitted using a TOC, but are transmitted directly to one or more Right Holder.

Furthermore, the Technical Operations Center (TOC) 12, receives the Multilateral Signal 11C, the Commentary Audio Signal 204, and the Unilateral Signals 30, encodes each signal and sends them to an International Broadcast Center (IBC, not shown in figure 2) using a corresponding transmission link.

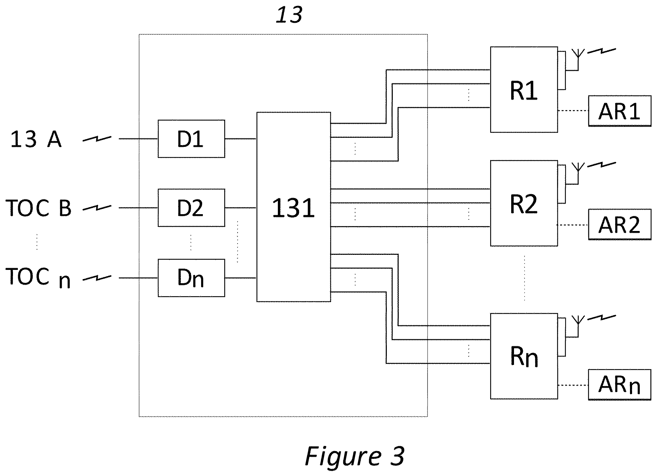

Figure 3 shows an International Broadcast Center (IBC) 13. The IBC 13 centralizes the management and distribution of the different received signals to broadcast platforms and other media distributors. In this example, the IBC 13 receives audio and video signals from venue 10 through radio link 13A, and from other venues (which are sent through the corresponding radio link TOCB to TOCn of each venue).

The IBC 13 decodes each encoded Multilateral Signal received from each venue, obtaining an audio and video signal for each Multilateral Signal. Then, an A/V Router 131 reroutes and transmits the decoded audio and video signals to the corresponding Right Holder R1, R2 to Rn. Furthermore, each Right Holder R1, R2 to Rn has a corresponding Analyzer AR1, AR2 to ARn.

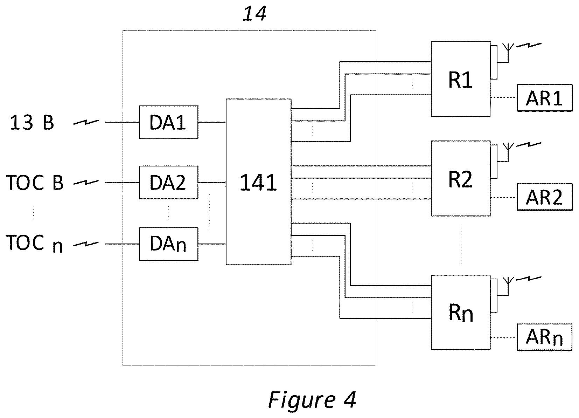

Figure 4 shows a Commentary Area Centre (CAC) 14. A CAC 14 is a specialized broadcast facility used primarily in live sports and event broadcasting. Its function is to manage and route audio feeds related to commentary and analysis. In this example, the CAC 14 receives the encoded Commentary Audio Signal 204 from TOC 12. It also receives other encoded Commentary Audio Signals from other venues radio links TOCB to TOCn respectively.

Each corresponding encoded Commentary Audio Signal is decoded and the audios are sent to a Commentary Router 141 which re-routes each Commentary Audio Signal to the corresponding Right Holder R1, R2 to Rn.

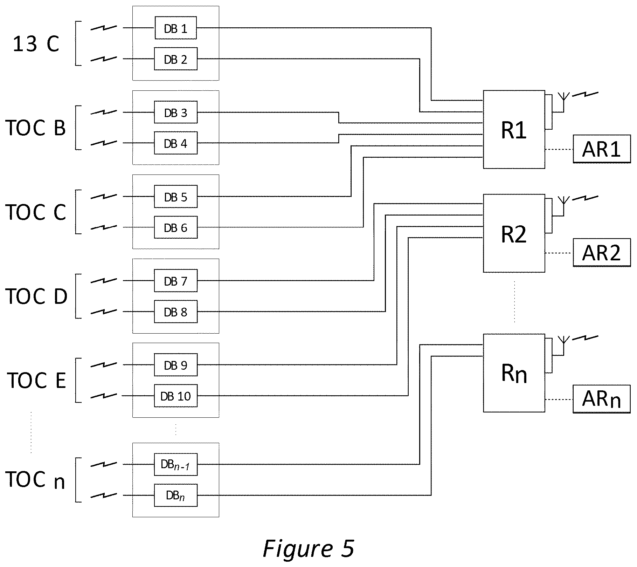

Figure 5 shows the fourth part of the example of figures 2 to 4, wherein the plurality of Right Holders R1, R2 to Rn shown in Figure 4 are also shown. Each Right Holder receives the corresponding Unilateral Signals form different venues. For example, Right Holder R1 receives the encoded Unilateral Signal of venue 10 through radio link 13C (from TOC 12), and Unilateral Signals from further venues through Radio Links TOCB, TOCC; Right Holder R2 receives the encoded Unilateral Signals of further venues through Radio Links TOCD, TOCE; and Right Holder Rn receives the encoded Unilateral Signals of further venues through Radio Links TOCn-1, TOCn. As previously seen in figure 4, each Right Holder R1, R2 to Rn has a corresponding Analyzer AR1, AR2 to ARn.

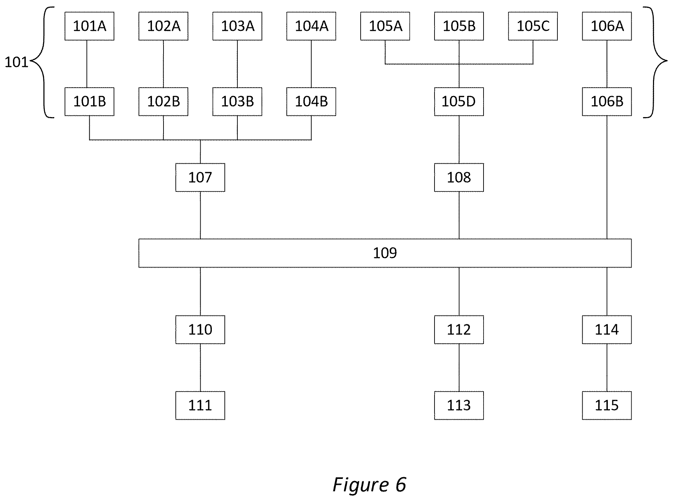

Figure 6 depicts a diagram block of an example of the method of synchronizing a plurality of data signals according to the present disclosure, the method being performed with the system of the example depicted in figures 2 to 5.

In step 101, audio and video signals are captured simultaneously by a plurality of video cameras and microphones of the system. More precisely, the following sub-steps are performed:
- Step 101A: Generator G1 performs the following steps:
   - selects an orthogonal pseudo-random sequence from a predefined set of orthogonal pseudo-random sequences stored within Generator G1;
   - obtains a binary timestamp representing a generation time of the encoded timestamp signal, the generation time being referenced to the UTC standard from a GPS signal obtained by Generator G1;
   - encodes the binary timestamp into an encoded timestamp signal in the form of a QR code displayed in a screen of Generator G1, using the selected orthogonal pseudo-random sequence.
- Step 101B: Camera 101 captures a video signal of an event A (a goal of a player in the game) and microphone 102 captures an audio signal of event A, the event happening at the venue 10. Furthermore, Camera 101 also captures the QR code displayed on the screen of Generator G1, the screen being located visible to Camera 101. Also, the captured video and audio signal are sent to the Outside Broadcast 11 using the cable link between Camera 101 and microphone 102, and the Outside Broadcast 11.
- Step 102A: Generator G2 performs the following steps:
   - selects an orthogonal pseudo-random sequence from a predefined set of orthogonal pseudo-random sequences stored within G2;
   - obtains a binary timestamp representing a generation time of the encoded timestamp signal, the generation time being referenced to the UTC standard from a GPS signal obtained by Generator G2;
   - encodes the binary timestamp into an encoded timestamp signal in the form of a bit stream; and
   - transmits the encoded timestamp signal to the Outside Broadcast 11 using the cable link between Generator G2 and the Outside Broadcast 11;
- Step 102B: Camera 103 captures a video signal of an event B (the referee looking how the player scores a goal) and microphone 104 captures an audio signal of event B, the event happening at the venue 10 at the same time as event A. Also, the captured video and audio signal are sent to the Outside Broadcast 11 in parallel with the transmission of the encoded timestamp signal transmitted in step 102A.
- Step 103A: Generator G3 performs the following steps:
   - selects an orthogonal pseudo-random sequence from a predefined set of orthogonal pseudo-random sequences stored within G3;
   - obtains a binary timestamp representing a generation time of the encoded timestamp signal, the generation time being referenced to the UTC standard from a GPS signal obtained by Generator G3;
   - encodes the binary timestamp into an encoded timestamp signal in the form of an audio signal output by a speaker of Generator G1, using the selected orthogonal pseudo-random sequence.
- Step 103B: Camera 105 captures a video signal of an event C (a goal of a player in the game) and microphone 106 captures an audio signal of event C, the event happening at the venue 10. Furthermore, microphone 106 also captures audio signal output by the speaker of Generator G3, the speaker being located nearby the microphone 106. Also, the captured video and audio signal are sent to the Outside Broadcast 11 using the radio link between Camera 105 and microphone 106, and the Outside Broadcast 11.
- Step 104A: Generator G4 performs the following steps:
   - selects an orthogonal pseudo-random sequence from a predefined set of orthogonal pseudo-random sequences stored within Generator G4;
   - obtains a binary timestamp representing a generation time of the encoded timestamp signal, the generation time being referenced to the UTC standard from a GPS signal obtained by Generator G4;
   - encodes the binary timestamp into an encoded timestamp signal in the form of an audio signal output by PA speakers 107A, 108A, 109A;
- Step 104B: Microphones 107, 108, 109 capture the audio output by PA speakers 107A, 108A, 109A, the microphones and PA speakers being located within the venue. Also, the captured audio signals of each microphone 107, 108, 109 are sent to the Outside Broadcast 11 using the cable link between microphones 107, 108, 109 and the Outside Broadcast 11.
- Step 105A: Generator G5 performs the following steps:
   - selects an orthogonal pseudo-random sequence from a predefined set of orthogonal pseudo-random sequences stored within G5;
   - obtains a binary timestamp representing a generation time of the encoded timestamp signal, the generation time being referenced to the UTC standard from a GPS signal obtained by Generator G5;
   - encodes the binary timestamp into an encoded timestamp signal in the form of an audio signal output by a speaker of Generator G5, using the selected orthogonal pseudo-random sequence.
- Step 105B: Generator G6 performs the following steps:
   - selects an orthogonal pseudo-random sequence from a predefined set of orthogonal pseudo-random sequences stored within G6;
   - obtains a binary timestamp representing a generation time of the encoded timestamp signal, the generation time being referenced to the UTC standard from a GPS signal obtained by Generator G6;
   - encodes the binary timestamp into an encoded timestamp signal in the form of a bit stream, using the selected orthogonal pseudo-random sequence; and
   - transmits the encoded timestamp signal to the CRN 20 using the cable link between Generator G6 and the CRN 20, Generator G6 being connected to the same link as microphone 202;
- Step 105C: Generator G7 performs the following steps:
   - selects an orthogonal pseudo-random sequence from a predefined set of orthogonal pseudo-random sequences stored within G7;
   - obtains a binary timestamp representing a generation time of the encoded timestamp signal, the generation time being referenced to the UTC standard from a GPS signal obtained by Generator G7;
   - encodes the binary timestamp into an encoded timestamp signal in the form of a bit stream, using the selected orthogonal pseudo-random sequence; and
   - transmits the encoded timestamp signal to the CRN 20 using the cable link between Generator G7 and the CRN 20, Generator G7 being connected to the same link as microphone 203;
- Step 105D: Microphones 201, 202 and 203 capture the corresponding commentator running a commentary on events happening on the venue 10. Furthermore, microphone 201 also captures the audio signal output by the speaker of Generator G5, the speaker being located nearby the microphone 201. Each microphone 201, 202 and 203 generates a corresponding audio signal; and each generated audio signal is transmitted to the CRN 20, in parallel with the transmission of the encoded timestamp signals transmitted in step 105B and 105C.
- Step 106A: Generator G8 performs the following steps:
   - selects an orthogonal pseudo-random sequence from a predefined set of orthogonal pseudo-random sequences stored within G8;
   - obtains a binary timestamp representing a generation time of the encoded timestamp signal, the generation time being referenced to the UTC standard from a GPS signal obtained by Generator G8;
   - encodes the binary timestamp into an encoded timestamp signal in the form of an audio signal output by a speaker of Generator G8, using the selected orthogonal pseudo-random sequence.
- Step 106B: Camera 301 captures a video signal of an event D (an image of the audience), microphone 302 captures an audio signal of event D. Also, microphone 303 captures the corresponding commentator running a commentary on event D, the event happening at the venue 10, at the same time as event A, B and C. Furthermore, microphone 302 further captures the audio signal output by the speaker of Generator G8, and microphone 303 further captures the audio signal output by the speaker of Generator G9, each speaker being located nearby the corresponding microphone 302, 303. Furthermore, the video and audio signal captured by camera 301 and microphone 302 respectively are multiplexed into a signal 30A and sent to the TOC 12. Then, the Unilateral signals 30, comprising signal 30A and Commentary signal 30B (30B comprising the commentary captured by microphone 303) is sent to the TOC 12.

In step 107, the audio and video signals sent to the Outside Broadcast 11 are combined, wherein a Video Switcher 11A mixes the incoming video signals, and an Audio Mixer 11B mixes all the incoming audio signals. After both video and audio have been mixed separately, they are mixed together into a single Multilateral Signal 11C.

More precisely, previous to the process of mixing, Analyzer A1 performs the following steps for each one of the audio and video signals received from microphones 102, 104, 106, 107, 108, 109 and cameras 101, 103, 105:
- receiving an encoded timestamp signal, transmitted from the corresponding Generator connected to the corresponding cable link, at a reception time, the reception time being referenced to the UTC standard from a GPS signal obtained by Analyzer A1;
- decoding the received encoded timestamp signal, using a predefined set of orthogonal pseudo-random sequences stored within Analyzer A1;
- obtaining a binary timestamp from the decoded timestamp signal, wherein the binary timestamp represents a generation time of the encoded timestamp signal; wherein the generation time and the reception time are referenced to a common UTC standard;
- calculating a delay of the received encoded timestamp signal, wherein the delay is a time difference between the reception time and the generation time.

Furthermore, once the delays corresponding to each of the received encoded timestamp signals transmitted by Generators G1, G2, G3 and G4 are calculated, Analyzer A1 synchronizes all the received audio signals and delivers the synchronization information (including each calculated delay corresponding to each received audio signals) to the Audio Mixer 11B, which mixes the audio separately. Furthermore, Analyzer A1 also synchronizes all the received video signals and delivers the synchronization information (including each calculated delay corresponding to each received video signal) to the Video Mixer 11A, which mixes the video separately. The synchronization is performed by aligning in time all of the audio and video signals in the process of mixing them into Multilateral Signal 11C.

In Step 108, the audio signals sent to the CRN 20 are multiplexed into a Commentary Audio Signal 204. In the process of multiplexing, Analyzer A2 performs the following steps for each one of the cable links between microphones 201, 202, 203 and the CRN 20:
- receiving an encoded timestamp signal, transmitted from the corresponding Generator connected to the corresponding cable link, at a reception time, the reception time being referenced to the UTC standard from a GPS signal obtained by Analyzer A2;
- decoding the received encoded timestamp signal, using a predefined set of orthogonal pseudo-random sequences stored within the Analyzer A2;
- obtaining a binary timestamp from the decoded timestamp signal, wherein the binary timestamp represents a generation time of the encoded timestamp signal; wherein the generation time and the reception time are referenced to a common UTC standard;
- calculating a delay of the received encoded timestamp signal, wherein the delay is a time difference between the reception time and the generation time.

Furthermore, once the delays corresponding to each of the received encoded timestamp signals transmitted by Generators G5, G6 and G7 transmitted through the corresponding cable links are calculated, Analyzer A2 synchronizes the three received audio signals from the corresponding microphones 201, 202, 203 based on the calculated delay. The synchronization is performed by aligning in time the three audio signals in the process of multiplexing them into Commentary Audio Signal 204.

In Step 109, Multilateral Signal 11C, Commentary Audio Signal 204, and Unilateral Signal 30 are sent to the TOC, wherein the Multilateral Signal 11C is encoded in C1, Commentary Audio Signal 204 is encoded in C2, and signal 30A and signal 30B are encoded in C3 and C4 respectively.

In the encoding of each of Multilateral Signal 11C and Commentary Audio Signal 204, a further Generator is used (G10, G11 respectively), in order to perform the same method of synchronization as performed, for example, with Generator G2.

Furthermore, the TOC 12 transmits each corresponding encoded signals using radio links 13A, 13B and 13C.

In Step 110, the encoded Multilateral Signal 11C is received through the radio link 13A by the IBC 13. Furthermore, the IBC 13 receives encoded Multilateral Signals from other TOCs TOCB to TOCn from other radio links connecting with other venues (not pictured). The received encoded Multilateral Signal 11C is decoded by decoder D1, and the rest of the received encoded Multilateral Signals are decoded by corresponding decoders D2 to Dn. All of the decoded Multilateral Signals are sent to the A/V Router 131, which re-routes each decoded Multilateral Signal to one or more Right Holders R1, R2 to Rn.

In Step 111, each Right Holder performs the method of synchronizing a plurality of received data signals as previously disclosed herein. More specifically, each Right Holder receives an encoded timestamp signal, which has been transmitted from the Generator G10, and performs the method of synchronization as previously described. This way, any delays of an encoded timestamp signal received by a Right Holder is used to synchronize a plurality of received Multilateral Signals, the delays occurring in the transmission of the encoded timestamp signal between the corresponding TOC and a Right Holder.

In Step 112 the encoded Commentary Audio Signal 204 is received through the radio link 13B by the CAC 14. Furthermore, the CAC 14 receives encoded Commentary Audio Signal from other TOCs TOCB to TOCn from other radio links connecting with other venues (not pictured). The received encoded Commentary Audio Signal 204 is decoded by decoder DA1, and the rest of the received encoded Commentary Audio Signals are decoded by corresponding decoders DA2 to DAn. All of the decoded Commentary Audio Signals are sent to the Commentary Router 141, which re-routes each decoded Commentary Audio Signal to one or more Right Holders R1, R2 to Rn.

In Step 113, each Right Holder performs the method of synchronizing a plurality of received data signals as previously disclosed herein. More specifically, each Right Holder receives an encoded timestamp signal, which has been transmitted from Generator G11, and performs the method of synchronization as previously described. This way, any delays of an encoded timestamp signal received by a Right Holder are used to synchronize a plurality of received Commentary Audio Signals, the delays occurring in the transmission of the encoded timestamp signal between the corresponding TOC and a Right Holder.

In Step 114 the encoded Unilateral Signal 30 is received through the radio link 13C by Right Holder R1. Furthermore, Right Holder R1 also receives encoded Unilateral Signals from other TOCs TOCB, TOCC from other radio links connecting with other venues (not pictured). Each Right Holder R2 to Rn also receives encoded Unilateral Signals from other TOCs from other radio links connecting with other venues (not pictured).

Upon reception, each Right Holder decodes the received Unilateral Signals using corresponding decoders DB1 to DBn, and the decoded Unilateral Signals are sent to the corresponding Right Holder R1 to Rn.

In Step 115, each Right Holder performs the method of synchronizing a plurality of received data signals as previously disclosed herein. More specifically, each Right Holder receives an encoded timestamp signal, which has been transmitted from Generator G8 and/or G9, and performs the method of synchronization as previously described. This way, any delays of an encoded timestamp signal received by a Right Holder are used to synchronize any of the signals forming the received Unilateral Signal 30, the delays occurring in the transmission of the encoded timestamp signal between the corresponding camera 301 or microphones 302 or 303, and a Right Holder.

For reasons of completeness, various aspects of the present disclosure are set out in the following numbered clauses:
Clause 1. A method of synchronizing a plurality of received data signals, the method comprising the steps of:
   - receiving an encoded timestamp signal at a reception time;
   - decoding the received encoded timestamp signal, using a predefined set of orthogonal pseudo-random sequences;
   - obtaining a binary timestamp from the decoded timestamp signal, wherein the binary timestamp represents a generation time of the encoded timestamp signal; wherein the generation time and the reception time are referenced to a common global time standard;
   - calculating a delay of the received encoded timestamp signal, wherein the delay is a time difference between the reception time and the generation time; and
   - synchronizing the plurality of received data signals based on the calculated delay.
Clause 2. The method according to clause 1, wherein the encoded timestamp signal is received from an audio communications channel, wherein the audio communications channel occupies a frequency band between 20 Hz and 20 KHz.
Clause 3. The method according to any of clauses 1 or 2 wherein the steps of:
   - receiving an encoded timestamp signal at a reception time;
   - decoding the received encoded timestamp signal, using a predefined set of orthogonal pseudo-random sequences;
   - obtaining a binary timestamp from the decoded timestamp signal, wherein the binary timestamp represents a generation time of the encoded timestamp signal; wherein the generation time and the reception time are referenced to a common global time standard; and
   - calculating a delay of the received encoded timestamp signal, wherein the delay is a time difference between the reception time and the generation time;
   are performed for each data signal of the plurality of received data signals, obtaining thereby a plurality of different corresponding delays; and wherein the step of synchronizing the plurality of received data signals is based on the greatest calculated delay of the plurality of different corresponding delays.
Clause 4. The method according to clause 3, wherein synchronizing the plurality of data signals based on the greatest calculated delay comprises aligning at least two data signals of the plurality of data signals.
Clause 5. The method according to any one of clauses 2 to 4, wherein each of the data signals of the plurality of data signals is received from the audio communications channel.
Clause 6. The method according to any one of clauses 1 to 5, wherein decoding the received encoded timestamp signal comprises:
   - calculating a cross-correlation between the received encoded timestamp signal and each of the sequences of the predefined set of orthogonal pseudo-random sequences, obtaining thereby a plurality of corresponding cross correlation parameters;
   and wherein the obtaining of the binary timestamp is performed using the orthogonal pseudo-random sequence used to calculate the highest cross-correlation parameter.
Clause 7. The method according to any one of clauses 1 to 6, wherein the orthogonal pseudo-random sequences are Maximum-Length Sequences (MLS).
Clause 8. The method according to any one of clauses 1 to 7, wherein the data signals are one of audio signals or video signals.
Clause 9. A method of transmitting an encoded timestamp signal for synchronizing a plurality of data signals, the method comprising the steps of:
   - selecting an orthogonal pseudo-random sequence from a predefined set of orthogonal pseudo-random sequences;
   - obtaining a binary timestamp representing a generation time of an encoded timestamp signal; wherein the generation time is referenced to a global time standard;
   - encoding the binary timestamp into an encoded timestamp signal, using the selected orthogonal pseudo-random sequence; and
   - transmitting the encoded timestamp signal.
Clause 10. The method according to clause 9, wherein the orthogonal pseudo-random sequences are Maximum-Length Sequences (MLS).
Clause 11. The method according to any of clauses 9 or 10, wherein the encoded timestamp signal is transmitted on an audio communications channel, wherein the audio communications channel occupies a frequency band between 20 Hz and 20 KHz.
Clause 12. A data processing apparatus for synchronizing a plurality of received data signals, comprising a processor configured to perform the steps of any one of clauses 1 to 8.
Clause 13. A data processing apparatus for transmitting an encoded timestamp signal for synchronizing a plurality of data signals, the apparatus comprising a processor configured to perform the steps of any one of clauses 9 to 11.
Clause 14. A Television system comprising:
   - a data processing apparatus according to clause 12;
   - a data processing apparatus according to clause 13; and
   - a plurality of data capturing devices, each data capturing device being configured to generate a corresponding data signal of the plurality of data signals;
Clause 15. The Television system according to clause 14, wherein the data signals are one of audio signals or video signals.
Clause 16. A computer program product comprising program instructions for causing a computing system to perform a method according to any of clauses 1 to 8.
Clause 17. A computer program product according to clause 16, embodied on a storage medium.
Clause 18. A computer program product according to clause 16, carried on a carrier signal.
Clause 19. A computer program product comprising program instructions for causing a computing system to perform a method according to any of clauses 9 to 11.
Clause 20. A computer program product according to clause 19, embodied on a storage medium.
Clause 21. A computer program product according to clause 19, carried on a carrier signal.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. A method of synchronizing a plurality of received data signals, the method comprising the steps of:
- receiving an encoded timestamp signal at a reception time;
- decoding the received encoded timestamp signal, using a predefined set of orthogonal pseudo-random sequences;
- obtaining a binary timestamp from the decoded timestamp signal, wherein the binary timestamp represents a generation time of the encoded timestamp signal; wherein the generation time and the reception time are referenced to a common global time standard;
- calculating a delay of the received encoded timestamp signal, wherein the delay is a time difference between the reception time and the generation time; and
- synchronizing the plurality of received data signals based on the calculated delay.

2. The method according to claim 1, wherein the encoded timestamp signal is received from an audio communications channel, wherein the audio communications channel occupies a frequency band between 20 Hz and 20 KHz.

3. The method according to any of claims 1 or 2 wherein the steps of:
- receiving an encoded timestamp signal at a reception time;
- decoding the received encoded timestamp signal, using a predefined set of orthogonal pseudo-random sequences;
- obtaining a binary timestamp from the decoded timestamp signal, wherein the binary timestamp represents a generation time of the encoded timestamp signal; wherein the generation time and the reception time are referenced to a common global time standard; and
- calculating a delay of the received encoded timestamp signal, wherein the delay is a time difference between the reception time and the generation time;
are performed for each data signal of the plurality of received data signals, obtaining thereby a plurality of different corresponding delays; and
wherein the step of synchronizing the plurality of received data signals is based on the greatest calculated delay of the plurality of different corresponding delays.

4. The method according to any one of claims 2 to 3, wherein each of the data signals of the plurality of data signals is received from the audio communications channel.

5. The method according to any one of claims 1 to 4, wherein the orthogonal pseudo-random sequences are Maximum-Length Sequences (MLS).

6. The method according to any one of claims 1 to 5, wherein the data signals are one of audio signals or video signals.

7. A method of transmitting an encoded timestamp signal for synchronizing a plurality of data signals, the method comprising the steps of:
- selecting an orthogonal pseudo-random sequence from a predefined set of orthogonal pseudo-random sequences;
- obtaining a binary timestamp representing a generation time of an encoded timestamp signal; wherein the generation time is referenced to a global time standard;
- encoding the binary timestamp into an encoded timestamp signal, using the selected orthogonal pseudo-random sequence; and
- transmitting the encoded timestamp signal.

8. The method according to claim 7, wherein the orthogonal pseudo-random sequences are Maximum-Length Sequences (MLS).

9. The method according to any of claims 7 or 8, wherein the encoded timestamp signal is transmitted on an audio communications channel, wherein the audio communications channel occupies a frequency band between 20 Hz and 20 KHz.

10. A data processing apparatus for synchronizing a plurality of received data signals, comprising a processor configured to perform the steps of any one of claims 1 to 6.

11. A data processing apparatus for transmitting an encoded timestamp signal for synchronizing a plurality of data signals, the apparatus comprising a processor configured to perform the steps of any one of claims 7 to 9.

12. A Television system comprising:
- a data processing apparatus according to claim 10;
- a data processing apparatus according to claim 11; and
- a plurality of data capturing devices, each data capturing device being configured to generate a corresponding data signal of the plurality of data signals;

13. The Television system according to claim 12, wherein the data signals are one of audio signals or video signals.

14. A computer program product comprising program instructions for causing a computing system to perform a method according to any of claims 1 to 6.

15. A computer program product comprising program instructions for causing a computing system to perform a method according to any of claims 7 to 9.
